(19) Europäisches Patentamt
European Patent Office
Office européen des brevets

(11) **EP 4 682 520 A1**

(12) **EUROPÄISCHE PATENTANMELDUNG**

(43) Veröffentlichungstag:
21.01.2026 Patentblatt 2026/04

(21) Anmeldenummer: 25190254.0

(22) Anmeldetag: 17.07.2025

(51) Internationale Patentklassifikation (IPC):
**G01N 25/18** (2006.01) **G01K 17/00** (2006.01)

(52) Gemeinsame Patentklassifikation (CPC):
**G01N 25/18; G01K 17/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **18.07.2024 DE 102024120407**

(71) Anmelder: **Deutsches Zentrum für Luft- und Raumfahrt e.V.**
**53227 Bonn (DE)**

(72) Erfinder:
• **Müller, Eckhard**
**53604 Bad Honnef (DE)**
• **Ziolkowski, Pawel**
**51147 Köln (DE)**
• **Oppitz, Gregor**
**53757 Sankt Augustin (DE)**
• **Ferrer Caro, Jhonatan Samuel**
**50969 Köln (DE)**

(74) Vertreter: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **VERFAHREN ZUR TRANSIENTEN MESSUNG EINES WÄRMESTROMS**

(57) Verfahren zur transienten Messung eines Wärmestroms mit einem Wärmestromsensor mit einer Messfläche, die mit einer Probe in Kontakt ist, einer Wärmequelle und einer Wärmesenke, wobei der Wärmestromsensor und die Probe zwischen der Wärmequelle und der Wärmesenke angeordnet sind, wobei der Wärmestrom an der Messfläche ermittelt wird, wobei zur Ermittlung des Wärmestroms an der Messfläche der durch den Wärmstromsensor gemessene Wärmestrom angepasst wird in Abhängigkeit von der auf Grund der Wärmekapazität des Wärmestromsensors abgegebenen oder aufgenommenen Wärmeleistung, wobei aus den Messwerten mehrerer Messungen mit verschiedener zeitlicher Temperaturänderungsrate auf das Messergebnis im stationären Fall rückgeschlossen werden kann.

```
┌────────────────────────────────────────────────────────────┐
│  Ermitteln eines Wärmestrom mittels eines Wärmestromsensors  │─── S01
│   insbesondere mittels einer gemessenen (ortsabhängigen)     │
│  Temperaturänderungsrate innerhalb oder an den Stirnflächen  │
│                    des Wärmestromsensors                     │
└────────────────────────────────────────────────────────────┘
                            │
                            ▼
┌────────────────────────────────────────────────────────────┐
│  Anpassung des ermittelten Wärmestroms in Abhängigkeit von   │─── S02
│   der auf Grund der Wärmekapazität des Wärmestromsensors      │
│  abgegebenen oder aufgenommenen Wärmeleistung zur Ermittlung  │
│   eines Wärmestroms an einer Messfläche des Wärmestromsensors.│
└────────────────────────────────────────────────────────────┘
```

**Fig. 1**

EP 4 682 520 A1

# EP 4 682 520 A1

**Beschreibung**

Die vorliegende Erfindung betrifft ein Verfahren zur transienten Messung eines Wärmestroms an block- oder plattenförmigen oder beliebig geformten Proben oder Bauteilen mit zumindest einer Eingangs- und einer Ausgangsfläche. Insbesondere betrifft die vorliegende Erfindung ein Verfahren zur Ermöglichung einer korrekten transienten Messung in Gegenüberstellung zu bekannten stationären Messverfahren.

Ziel der Messung gemäß dem Verfahren der vorliegenden Erfindung ist die korrekte Bestimmung des Wärmestroms, der durch eine Messfläche eines Wärmestromsensors hindurchtritt, über die die Messeinrichtung bzw. der Wärmestromsensor mit der Probe in thermischem Kontakt steht.

Im Stand der Technik sind stationäre thermische Wärmestrommessungen an Bauteilen oder Materialproben bekannt.

Bei der Absolutmethode, welche in der ASTM-Norm C177 als Guarded hot plate bzw. in der ISO-Norm 8302 als Plattengerät bezeichnet wird, erfolgt die Wärmestrombestimmung durch Messung der elektrischen Leistungsaufnahme eines thermisch aktiv geschirmten Messheizers. Die thermische Schirmung wird durch einen oder mehrere Schutzheizer gewährleistet, deren Temperatur auf die Temperatur des Messheizers geregelt wird. Durch den verschwindenden Temperaturunterschied zwischen Mess- und Schutzheizer(n) minimiert sich der Wärmeaustausch zwischen diesen Heizern. Im Idealfall fließt keine Wärme zwischen den Heizern. Die Schutzheizer sind derart um den Messheizer angeordnet, dass die im Messheizer freigesetzte Wärme ausschließlich über die Probe bzw. das zu untersuchende Bauteil abfließen kann. Der Wärmestrom, der durch die Probe hindurchtritt, entspricht in diesem Messverfahren genau der vom Messheizer aufgenommenen elektrischen Leistung. Die Messung des Wärmestromes wird damit in eine Messung des elektrischen Stromflusses und des Spannungsabfalls am Messheizer überführt. Dieses Messverfahren kommt ohne Vergleichswerte aus und wird deshalb als absolutes Messverfahren bezeichnet.

Beim Vergleichsverfahren, welches in der ASTM-Norm E1225 als komparative longitudinale Wärmestromtechnik (engl. Comparative-Longitudinal Heat Flow Technique) bezeichnet wird, erfolgt die Wärmestrombestimmung durch Auswertung des Temperaturgradienten innerhalb eines als Wärmestrommesser fungierenden Referenzblocks. Der Referenzblock, dessen thermische Leitfähigkeit bekannt sein muss, wird thermisch in Reihe zur Messprobe bzw. dem zu untersuchenden Bauteil angeordnet. Der Temperaturgradient, welcher sich beim Wärmedurchgang im Referenzblock ausbildet, wird über geeignete Temperatursensoren gemessen, die innerhalb des Referenzblocks axial in Richtung des Wärmeflusses positioniert sind. Bei bekannter thermischer Leitfähigkeit und Geometrie des Referenzblocks (typischerweise in Gestalt eines geraden Prismas mit einer Achsenrichtung parallel zum Wärmefluss) kann durch Messung des Temperaturgradienten der fließende Wärmestrom bestimmt werden.

Wärmeverluste, die bspw. durch einen Strahlungsaustausch des Referenzblocks über seine Mantelfläche mit der Umgebung oder durch Wärmeleitung zwischen Referenzblock und Umgebung entstehen, verfälschen das Messergebnis. Zur Minimierung dieser parasitären Wärmeströme kann der Referenzblock mit einer passiven thermischen Dämmung versehen oder mittels Schirmheizern aktiv von seiner thermischen Umgebung entkoppelt werden. Das Vergleichsverfahren kommt bei der Bestimmung des Wärmestromes nicht ohne einen Referenzwert für die thermische Leitfähigkeit des eingesetzten Referenzblock-Materials aus, weshalb es als Relativmessung klassifiziert wird. Die Genauigkeit des Vergleichsverfahrens hängt wesentlich auch von der Genauigkeit dieses Referenzwertes ab.

Unter der allgemeinen Bezeichnung einer Wärmestrommessapparatur definiert die ASTM-Norm C518 (engl. Heat Flow Meter Apparatus) eine spezielle Ausführung des Vergleichsverfahrens, in welcher statt eines Referenzblocks mit axial angeordneten Temperatursensoren der Einsatz eines Messumformers zur Bestimmung des Wärmestromes beschrieben wird. Dieser Messumformer, welcher als möglichst dünnes, plattenförmiges Bauteil ausgeführt ist, wird wie ein Referenzblock im Vergleichsverfahren thermisch in Reihe zur Probe bzw. dem zu untersuchenden Bauteil platziert. Im Unterschied zum Referenzblock verfügt der beschriebene Messumformer ausschließlich über Temperatursensoren, welche nahe seiner beiden Kopplungsflächen eingebracht werden und zur Bestimmung des gesamten Temperaturunterschiedes am Umformer dienen. Zur Erhöhung der Signalstärke bzw. für die Ermittlung eines über die Kopplungsflächen gemittelten Temperaturunterschiedes können mehreren Sensoren jeweils über beide Kopplungsflächen verteilt, bzw. als Thermosäule mit seriell verschalteten Thermoelementen ausgeführt werden. Wie schon beim Vergleichsverfahren nach E1225 wird auch für die beschriebene Wärmestrommessapparatur nach C518 ein effektiver thermischer Leitwert des Messumformers für die Bestimmung des Wärmestromes benötigt. Der thermische Leitwert des Messumformers wird unter Zuhilfenahme von thermischen Referenzmaterialien, welche als Proben mit bekannter thermischer Leitfähigkeit zusammen mit dem Messumformer in die Messstrecke eingebaut werden, über Kalibrierungsmessungen ermittelt.

Stationäre Messverfahren benötigen vor jedem Messvorgang eine Stabilisierungszeit für den Temperaturausgleich, die je nach der Wärmekapazität und dem Ableitungswärmewiderstand der involvierten Bauteile der Messapparatur lang sein können, woraus lange Wartezeiten und entsprechend lange Gesamtdauern einer temperaturabhängigen Messreihe resultieren können. Die Stabilisierungszeit kann in praktisch relevanten Fällen beim Vergleichsverfahren mit Probengrößen von einigen Zentimetern Kantenlänge je nach Ausführung der Messapparatur und der thermischen Eigenschaften verwendeter Bauteile mehr als eine Stunde betragen. Beim Absolutmessverfahren werden bei guter thermischer Isolation der Mess- und Schirmheizer in den einschlägigen Normen und Richtlinien Stabilisierungszeiten von mehreren Stunden empfohlen. Die Bestimmung des Wärmestromes muss für eine Probe typischerweise bei verschiedenen Temperaturbedingungen durchgeführt werden, wobei nach jeder Verstellung dieser Bedingungen die entsprechende Stabilisierung abzuwarten ist. Oft beträgt der Abstand der Messtemperaturen ca. 50 K bei einem gesamten Temperaturbereich einer Messreihe von typischerweise mehreren hundert K. Damit können stationäre Wärmestrommessungen leicht eine Dauer von mehreren Tagen erfordern. Sollen Wärmeströme an Materialien oder Bauteilen gemessen werden, welche ihrer Funktion nach unter elektrischem Stromfluss oder anderen zu variierenden Bedingungen betrieben werden, die sich auf die Temperatur des Messobjekts auswirken, erfordert eine vollständige Charakterisierung die unabhängige Einstellung von Temperatur- und Strom-Werten oder weiteren Probenparametern. Dabei führt auch jede Verstellung des elektrischen Stromflusses oder weiterer Probenparameter bei an sich unveränderten äußeren Temperaturverhältnissen zu einer Veränderung der Temperaturverteilung innerhalb der Messanordnung, die das Abwarten der Stabilisierungszeit erfordert. Damit kann sich die Dauer der gesamten Messung um ein Vielfaches verlängern. Werden weitere Rand- bzw. Messbedingungen variiert, welche ebenfalls Auswirkungen auf die Verteilung von Temperaturen und Wärmeströmen in der Messanordnung haben, wie bspw. der mechanische Anpressdruck auf die Probe, oder der Druck oder die Spülrate der Messatmosphäre, so müssen auch hierbei entsprechende Stabilisierungszeiten abgewartet werden. Durch die langen Stabilisierungszeiten besitzen etablierte stationäre Messverfahren den Nachteil, dass Proben, Materialübergänge und Kontakte während des Messprozesses thermisch altern können, wodurch eine Vergleichbarkeit und Aussagekraft der Daten massiv eingeschränkt werden kann. Dies trifft vor allen Dingen für neue und unbekannte Materialien und Bauteile zu, deren Charakterisierung in besonderem Maße von einer beschleunigten Messprozedur profitiert.

Aufgabe der vorliegenden Erfindung ist es, ein Verfahren zur transienten Messung eines Wärmestroms einer Probe mit hoher Genauigkeit zu schaffen, wodurch unter Beibehaltung der Messgenauigkeit insbesondere die Messzeiten gegenüber stationären Messverfahren deutlich reduziert werden.

Die Aufgabe wird gelöst durch ein Verfahren zur transienten Messung eines Wärmestroms gemäß Anspruch 1.

Für das Verfahren zur transienten Messung eines Wärmestroms gemäß der vorliegenden Erfindung ist ein Wärmestromsensor vorgesehen mit einer Messfläche, die mit einer Probe in thermischem Kontakt ist. Hierbei kann die Probe block- oder plattenförmig geformt sein oder eine beliebige Form aufweisen, insbesondere weist die Probe mindestens eine Außenfläche auf zum insbesondere vollflächig gleichmäßigen thermischen Kontakt mit dem Wärmestromsensor. Hierbei kann es sich bei der Messfläche um eine ebene oder an das Messobjekt bzw. die Probe angepasst geformte Messfläche des Wärmestromsensors handeln. Ziel der Messung ist es, den Wärmestrom durch die Messfläche zu ermitteln. Die Kopplungsbedingungen an diesem Interface bzw. der Messfläche werden hier nicht betrachtet, jedoch ist klar, dass für die meisten relevanten Anwendungen eine vollflächig gute Wärmeankopplung erforderlich ist. Vorzugsweise bedeckt das Messobjekt die Messfläche gleichmäßig, jedoch nicht notwendigerweise vollständig, aber so gleichmäßig verteilt, dass man am Ort der Temperaturmessung innerhalb des Wärmestromsensors von einem eindimensionalen Wärmetransport, d. h. parallelen und homogen über den Querschnitt verteilten Wärmestromlinien durch den Wärmestromsensor ausgehen kann. Vorzugsweise ist jedoch die gesamte Messfläche des Wärmestromsensors in Kontakt mit der Probe. Dabei ist ein beliebiger Randüberstand des Messobjekts, aber auch ein geringer Randüberstand des Wärmestrommessers gegenüber dem Messobjekt zugelassen. Es wird insbesondere eine ideale thermische Kopplung oder eine homogen über die Grenzfläche verteilte Wärmeübergangszahl vorausgesetzt.

Erfindungsgemäß ist eine Wärmesenke und eine Wärmequelle vorgesehen, wobei der Wärmestromsensor und die Probe zwischen der Wärmesenke und der Wärmequelle angeordnet sind. Somit fließt ein Wärmestrom von der Wärmequelle zur Wärmesenke. Der gesamte Aufbau enthält somit eine serielle Anordnung bzw. Messsäule, welche typischer Weise neben dem Sensor und dem Messobjekt auch die Wärmequelle und Wärmesenke und ggf. Übergangsstücke beispielsweise zur Querschnittsanpassung zwischen Wärmequelle, Wärmesenke und Probe aufweist.

Gemäß dem vorliegenden Verfahren wird der Wärmestrom an der Messfläche ermittelt. Grundlage hierfür sind lokal verteilte Temperaturmessungen innerhalb des Wärmestromsensors oder nahe seiner Grenzflächen, die auch gleichzeitig Messflächen darstellen, an denen die Probe thermisch ankoppelt. Die Messung des Temperaturprofils im Wärmestrommesser bzw. des Temperaturunterschiedes an einem dünn ausgeführten Messumformer bildet auch in stationären Messverfahren die Grundlage der Wärmestrombestimmung. Im vorliegenden transienten Messverfahren wird zur Ermittlung des Wärmestroms an der Messfläche des Wärmestromsensors zusätzlich das durch den Wärmestromsensor gemessene Temperaturprofil bzw. der Temperaturunterschied angepasst in Abhängigkeit von der aufgrund der Wärmekapazität des Wärmestromsensors von dem Wärmestromsensor abgegebenen oder aufgenommenen Wärmeleistung. Transiente Verfahren zur Bestimmung des Wärmestroms an einer definierten Kopplungsfläche bzw. Messfläche zu einer damit im thermischen Austausch gebrachten Probe sind bisher nicht bekannt. Das physikalisch begründete Haupthindernis im transienten Fall ist dabei die Aufhebung der Kontinuitätsbedingung beim Wärmedurchgang durch eine serielle Anordnung, die im stationären Fall gilt. Im stationären Fall ist der Wärmestrom unter Ausschluss seitlicher Wärmeverluste aus dem Wärmeleitpfad durch alle seriell verbundenen Bauteile bzw. alle ihre Querschnittsflächen gleich groß. Dies gilt im transienten Fall nicht mehr. Der Wärmestrom wird längs der seriellen Anordnung bzw. in Richtung des Wärmestroms ortsabhängig, wobei die Ortsabhängigkeit durch die Wärmekapazität der involvierten Bauteile und ihre lokale Temperaturänderung bestimmt ist. Diese lokale Wärmetönung führt dazu, dass das Temperaturprofil in einem homogenen Körper bei Erwärmung (positive Temperaturdriftrate) aufgrund der lokalen Absorption von Wärme durch dessen Wärmekapazität im Vergleich zum stationären Temperaturprofil nach unten durchgebogen wird. Bei andauernder Abkühlung der Probe (negative Driftrate), bildet sich mit der Wärmeabgabe durch die Wärmekapazität eine Durchbiegung des Temperaturprofils nach oben aus. In realen technischen Anordnungen ist die lokale Änderung des Wärmestroms im allgemeinen transienten Fall in ihrer räumlichen und zeitlichen Variation nicht ausreichend erfassbar. Eine korrekte transiente Messung des Wärmestroms wird erfindungsgemäß durch die Erfassung und Berücksichtigung des mit der Wärmekapazität des Sensors verbundenen Beitrags zum Wärmestrom an der Messfläche unter Einhaltung quasistationärer Bedingungen erreicht. Es wird somit erfindungsgemäß ein Verfahren geschaffen, welches unter Berücksichtigung der Wärmekapazität des Wärmestromsensors die Ortsabhängigkeit des Wärmestroms im Sensor extrapoliert und hierdurch den Wärmestrom an der Messfläche ermitteln lässt.

Dem erfindungsgemäßen transienten Verfahren liegt die Einstellung und Erhaltung eines quasistationären Zustandes zugrunde, der dadurch gekennzeichnet ist, dass sich an jedem Ort im Wärmestromsensor die Temperatur mit einer konstanten (oder nur sehr langsam variierenden) Rate ändert, wobei diese Rate von Ort zu Ort verschieden sein kann. Damit tritt aufgrund der Wärmekapazität des Materials an jedem Ort eine zeitlich konstante, definiert ortsabhängige Wärmeaufnahme durch das Material (bei steigender Temperatur) oder Wärmeabgabe (bei fallender Temperatur) auf, die für einfache Geometrien mathematisch-analytisch erfassbar und aus der Rate der Temperaturänderung und Stoffgrößen des Materials des Wärmestromsensors ermittelbar ist.

Die Gesamtdauer einer Messreihe, die sich durch die transiente Messung gemäß der vorliegenden Erfindung ergibt, wird praktisch nicht mehr dominierend von den verfahrensbedingten Wartezeiten zur Stabilisierung limitiert, sondern durch andere Bedingungen der Messanlage und Messung, z.B. durch sinnvoll realisierbare maximale Heizleistungen sowie ggf. den Zeitbedarf der Messwerterfassung selbst, sofern komplexere Messprogramme zu realisieren sind. Temperaturintervalle von mehreren 100 K lassen sich im Messbetrieb so in einer oder wenigen Stunden überstreichen.

Vorzugsweise erfolgt eine kontinuierliche Messung des Wärmestroms. Für eine temperaturabhängige Messreihe unter sonst unveränderten Randbedingungen ist nur einmalig zu Beginn der Messreihe oder ggf. ein weiteres Mal beim Wechsel vom Aufheizen zum Abkühlen, sofern in einem Temperaturzyklus aufeinander folgend in diesen beiden Modi gemessen werden soll, ein Abwarten der Relaxation des Wärmestromsensors in einen quasistationären Zustand erforderlich, ansonsten kann kontinuierlich gemessen werden.

Vorzugsweise wird eine Temperaturänderungsrate an dem Wärmestromsensor ermittelt. Insbesondere wird eine mittlere Temperaturänderungsrate über den Wärmestromsensor ermittelt. Im stationären Verfahren wird der konstante Wärmestrom durch den Wärmestromsensor durch eine Messung der Temperaturdifferenz über die Gesamtlänge des Referenzblocks (bzw. die Gesamtdicke eines scheibenförmigen Wärmestromsensors), geteilt durch den Wärmewiderstand des Wärmestromsensors, bestimmt. Unter allgemeinen transienten Verhältnissen liefert dieses Vorgehen einen Mittelwert über den Wärmestrom im Wärmestromsensor, der sich jedoch von den an den Stirnflächen ein- und austretenden Beträgen des Wärmestroms in unbekannter Weise unterscheidet. Jedoch kann durch die Einstellung eines quasistationären Zustandes verbunden mit der Messung der Temperaturänderungsrate (oder im Nachfolgenden auch als "Temperaturdrift" bezeichnet) an beiden Stirnflächen des Wärmestromsensors eine Beziehung zwischen dem gemessenen mittleren Wärmestrom und den Grenzflächen-Wärmeströmen des Wärmestromsensors aufgestellt werden und zur Bestimmung des korrekten Wärmestroms an der Messfläche herangezogen werden. Dazu wird aus Temperaturmessungen im Inneren oder an den Stirnflächen des Wärmestromsensors der mittlere Temperaturdrift des Wärmestromsensors bestimmt. Multiplikation mit der Wärmekapazität des Wärmestromsensors liefert die konstante im Wärmestromsensor absorbierte bzw. freigesetzte Wärmeleistung. Der Zu- bzw. Abstrom dieser Wärmeleistung in den bzw. aus dem Wärmestromsensor verteilt sich auf die beiden Seiten des Wärmestromsensors in einem festen Verhältnis, das nur von der Temperaturdrift an den Stirnflächen des Wärmestromsensors abhängt. Im Fall eines dünnen, scheibenförmigen Wärmestromsensors mit geringer Temperaturdifferenz über dem Wärmestromsensor ergibt sich eine symmetrisch hälftige Verteilung zu beiden Seiten; allgemein wird der größere Anteil zur Seite mit der stärkeren Temperaturdrift ausgetauscht. Damit kann der Wärmestrom an der Messfläche zur Probe bestimmt werden, in dem der gemessene mittlere Wärmestrom im Sensor um den Betrag der auf Grund der Wärmekapazität des Sensors gespeicherten (bei steigender Temperatur) bzw. abgegebenen (bei fallender Temperatur) Wärmeleistung korrigiert wird.

Vorzugsweise handelt es sich bei dem Wärmestromsensor um einen scheibenförmigen Wärmestromsensor, wobei die Temperaturdifferenz zwischen gegenüberliegenden Stirnflächen herangezogen wird zur Ermittlung der Temperaturänderungsrate. Hierbei bezeichnet "scheibenförmig" die Eigenschaft, dass die Dicke des Wärmestromsensors in Richtung des Wärmestroms kleiner ist als die transversale Ausdehnung. Hierbei muss der scheibenförmige Wärmestromsensor nicht rund ausgebildet sein, sodass anders geformte Messflächen durch den scheibenförmigen bzw. dünnen Wärmestromsensor ausgebildet sein können. Insbesondere ist, wie vorstehend ausgeführt, die Messfläche an die jeweilige Probe angepasst. Insbesondere sind zur Bestimmung des transienten Verhaltens des scheibenförmigen Wärmestromsensors dessen Wärmewiderstand und Wärmekapazität bekannt.

Vorzugsweise handelt es sich bei dem Wärmestromsensor um einen Referenzblock, wobei entlang des Referenzblocks in Richtung des Wärmestroms mehrere Temperaturmessungen erfolgen zur Ermittlung der (örtlichen) Temperaturänderungsrate. Insbesondere handelt es sich bei dem Referenzblock um einen prismatischen Block, wobei vorzugsweise dessen Wärmeleitfähigkeit und die spezifische Wärme des Materials des Referenzblocks bekannt ist zur Ermittlung des Temperaturprofils bzw. der Temperaturänderungsrate entlang des Referenzblocks.

Vorzugsweise sind in Richtung des Wärmeflusses die Wärmequelle, der Wärmestromsensor, die Probe und die Wärmesenke in dieser Reihenfolge angeordnet. Hierbei muss kein direkter Kontakt zwischen Wärmequelle und Wärmestromsensor bzw. Probe und Wärmesenke vorhanden sein, wobei Übergangsstücke zwischen Wärmequelle bzw. Wärmesenke einerseits und Probe bzw. Wärmestromsensor andererseits vorhanden sein können. Hierdurch wird ein serieller Aufbau im Sinne einer Messsäule geschaffen. Alternativ kann die Reihenfolge des Wärmestromsensors und der Probe vertauscht werden, sodass in Richtung des Wärmeflusses die Wärmequelle, die Probe, der Wärmestromsensor und die Wärmesenke angeordnet sind. Im ersten Fall ist somit die Probe auf der Kaltseite des Wärmestromsensors angeordnet, wohingegen im zweiten Fall die Probe auf der Heißseite des Wärmestromsensors angeordnet ist.

Vorzugsweise wird bei Änderung von einem Aufheizen zu einem Abkühlen oder bei Änderung eines Probenparameters eine Relaxationszeit abgewartet, wobei die Relaxationszeit die Zeit bezeichnet, die erforderlich ist, bis ein quasistationärer Zustand im Wärmestromsensor erreicht ist. Es ist somit nicht mehr erforderlich, dass die gesamte Messsäule bzw. der gesamte Messaufbau einen quasistationären bzw. stationären Zustand erreicht, wie es bei stationären Messverfahren der Fall ist. Vielmehr ist es ausreichend, dass sich ein quasistationärer Zustand lediglich im Wärmestromsensor einstellt. Entsprechend handelt es sich somit bei der Relaxationszeit insbesondere um die Relaxationszeit des Wärmestromsensors an sich. Werden Messung von weiteren Eigenschaften der Probe einbezogen, ist auch die Relaxationszeit des Messobjekts zu berücksichtigen. Eine solche Probeneigenschaft kann erst gültig gemessen werden, wenn die längere der beiden Relaxationszeiten, die für den Wärmestromsensor oder die Probe (jeweils allein für sich) zutreffen, verstrichen ist.

Vorzugsweise werden mindestens zwei Messungen mit unterschiedlicher Temperaturänderungsraten durchgeführt und aus den mindestens zwei Messungen auf die Temperaturänderungsrate Null interpoliert oder extrapoliert. Abgesehen vom Vorteil der viel schnelleren Durchführung im Vergleich zu stationären Messungen muss bei transienten Messungen auch ein verändertes Verhalten des Messobjekts und des thermischen Gesamtsystems berücksichtigt werden, denn auch dort wirkt sich die Wärmekapazität aller Komponenten aus. Daraus ergibt sich die Frage, ob sich aus transienten Messungen auch auf das Verhalten des Systems unter stationären Bedingungen schließen lässt. Diese Frage ist praktisch relevant, da Messobjekte als Funktionsgruppen in Systemen und Anwendungen typischerweise oft im stationären Modus betrieben werden. Dieser Rückschluss ist mit einer Interpolation (oder "Hebelmethode") möglich, die in gleicher Weise für beide Sensorgeometrien, Referenzblock und dünne Scheibe, durchführbar ist und unmittelbar unter Nutzung der Messmethodik der stationären Messung ohne Modifikation der Auswertung erfolgen kann. Dazu führt man mindestens zwei Messungen und insbesondere zwei Messreihen im selben Temperaturbereich, aber mit unterschiedlicher Temperaturdrift/-änderungsrate durch (z.B. einen Aufheiz- und einen darauffolgenden Abkühlvorgang), deren Messwerte miteinander ausgewertet werden. Da die Abweichung des Systemverhaltens vom stationären Verhalten im quasistationären transienten Fall proportional zur Temperaturdrift skaliert, können die erhaltenen Messwerte bei einer gegebenen Temperatur gegen den Temperaturdrift aufgetragen und insbesondere linear auf die Temperaturänderungsrate Null interpoliert (oder, bei gleichem Vorzeichen der Driftrate in beiden Fällen, extrapoliert) werden. Der zum stationären Zustand gehörige Wärmestrommesswert entspricht gerade dem Achsenabschnitt der Verbindungsgeraden zwischen den Messwerten aus beiden Messungen (z. B. Auf- und Abkühlmessung). Liegen mehr als zwei Messungen vor, können sie in die Hebelmethode einbezogen werden, indem eine Ausgleichgerade durch alle Messwerte der verschiedenen Messungen bei gleicher Messtemperatur gelegt wird. Ein wesentlicher Vorteil dieser Methode ist, dass sie einerseits wesentlich schneller als eine stationäre Messung ist, dennoch aber im Wesentlichen ohne Modifikationen in Hardware und Auswertung, abgesehen von der beschriebenen gewichteten Mittelung der Messwerte, unmittelbar mit bestehenden Anlagen zum stationären Verfahren durchgeführt werden kann, indem auf die Stabilisierungsperioden verzichtet wird und lediglich die mittlere Heizrate an einer wählbaren Stelle des Messkopfes aufgenommen wird. Vorteilhaft, weil praktisch vereinfachend, ist auch, dass dabei das oben beschriebene Korrekturverfahren um den Betrag der aufgrund der Wärmekapazität vom Wärmestromsensor aufgenommenen bzw. freigesetzten Wärme nicht angewendet werden muss, da auch der Korrekturterm linear mit der Heizrate skaliert. Eine einfache Messung des mittleren Wärmestroms im Wärmestromsensor wie beim stationären Verfahren ist ausreichend. Werden begleitend zum Wärmestrom weitere Messgrößen an der Probe aufgenommen, die ebenfalls im transienten Modus gegenüber dem stationären Zustand proportional zur Heizrate verfälscht werden, so können auch diese bei den - beiden oder mehreren - verknüpften Messreihen begleitend mit der im stationären Modus üblichen Methodik gemessen und analog zum gemessenen Wärmestrom auf eine verschwindende Heizrate interpoliert werden. Vereinfachend ist ferner, dass insbesondere auch die Heizrate nicht notwendig an der Messfläche des Wärmestromsensors bestimmt werden muss. Die Messung an einem beliebigen aber festen Ort innerhalb oder in der Nähe des Wärmestromsensors ist ausreichend. Der Vorteil dieser Hebelmethode besteht neben der hohen Zeitersparnis auch in der weit höheren Messpunktdichte, da kontinuierlich über den Temperaturbereich gemessen werden kann. Der Bezugswert für die Zuordnung der Messwerte des Wärmestroms aus den Messreihen ist insbesondere die Temperatur der Messfläche des Wärmestromsensors, d. h. die beschriebene Interpolation wird mit zwei (oder mehreren) Messwerten durchgeführt, die bei derselben Temperatur an der Messfläche erhalten wurden. Hier ist ersatzweise insbesondere kein anderer Messort zulässig, anders als bei der Heizrate. Wird die Hebelmethode auf eine gemessene Eigenschaft des Messobjekts angewendet und bildet sich über dem Messobjekt eine wesentliche Temperaturdifferenz aus, sollte ein Messort der Referenztemperatur im Inneren des Messobjektes gewählt werden, sofern sich die gemessene Eigenschaft des Messobjekts signifikant nichtlinear mit der Temperatur ändert. Wird der Wärmestrom oder die interessierende Messgröße des Messobjektes nicht kontinuierlich sondern in zeitlichen Intervallen aufgenommen, so wird der in die Hebelmethode eingehende Messwert aus einer Interpolation der temperaturabhängig variierenden Messwerte auf die Bezugstemperatur erhalten.

Nachfolgend wird die vorliegende Erfindung genauer beschrieben mit Bezugnahme auf die beigefügten Figuren.

Die Figuren zeigen:

Figur 1 ein schematisches Ablaufdiagram des Verfahrens gemäß der vorliegenden Erfindung,

Figuren 2A-2C schematische Darstellungen des Wärmestromsensors gemäß der vorliegenden Erfindung,

Figuren 3A, 3B schematischer Messaufbau gemäß der vorliegenden Erfindung,

Figur 4 Vergleich der Messergebnisse der vorliegenden Erfindung mit dem Stand der Technik,

Figur 5 Skizze zur Veranschaulichung der Abhängigkeit der Messwerte des Wärmestroms und anderer Messgrößen am Messobjekt von der Temperaturdriftrate bei einer quasistationären transienten Messungen gemäß der vorliegenden Erfindung und

Figuren 6A, 6B Zeitlicher Temperaturverlauf des Verfahrens gemäß der vorliegenden Erfindung (Fig. 6A) im Vergleich zum Stand der Technik (Fig. 6B).

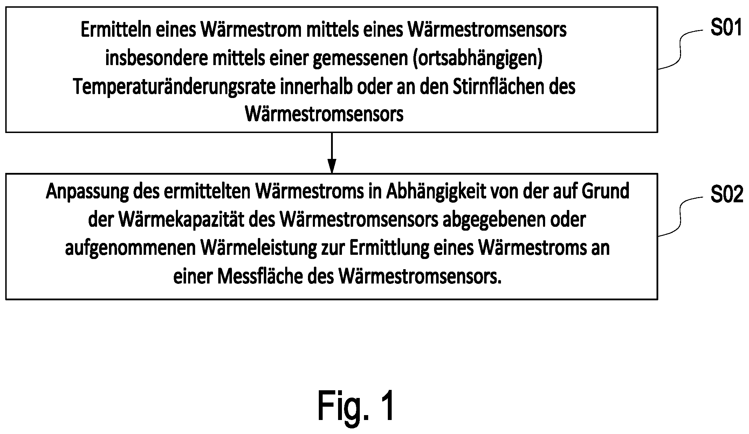

Im Folgenden wird Bezug genommen auf Figur 1. Gemäß dem Verfahren der vorliegenden Erfindung weist dieses die Schritte auf:

In Schritt S01 wird ein Wärmestrom mittels eines Wärmestromsensors bestimmt insbesondere mittels einer gemessenen (ortsabhängigen) Temperaturänderungsrate innerhalb oder an den Stirnflächen des Wärmestromsensors. In Schritt S02 wird der ermittelte Wärmestrom angepasst in Abhängigkeit von der auf Grund der Wärmekapazität des Wärmestromsensors abgegebenen oder aufgenommenen Wärmeleistung zur Ermittlung eines Wärmestroms an einer Messfläche des Wärmestromsensors.

Transiente Verfahren zur Bestimmung des Wärmestroms an einer definierten Kopplungsfläche zu einem damit in thermischen Austausch gebrachten Messobjekt sind bisher nicht bekannt. Das physikalisch begründete Haupthindernis im transienten Fall ist dabei die Aufhebung der Kontinuitätsbedingung beim Wärmedurchgang durch eine serielle Anordnung, die im stationären Fall gilt. Im stationären Fall ist der Wärmestrom unter Ausschluss seitlicher Wärmeverluste aus dem Wärmeleitpfad durch alle seriell verbundenen Bauteile bzw. alle ihre Querschnittsflächen gleich groß. Dies gilt im transienten Fall nicht mehr. Der Wärmestrom wird längs der seriellen Anordnung ortsabhängig, wobei die Ortsabhängigkeit durch die Wärmekapazität der involvierten Bauteile und ihre lokale Temperaturänderung bestimmt ist. Diese lokale Wärmetönung führt dazu, dass das Temperaturprofil in einem homogenen Körper bei Erwärmung (positive Temperaturdriftrate) aufgrund der lokalen Absorption von Wärme durch dessen Wärmekapazität im Vergleich zum stationären Temperaturprofil nach unten durchgebogen wird. Bei andauernder Abkühlung der Probe (negative Driftrate), bildet sich mit der Wärmeabgabe durch die Wärmekapazität eine Durchbiegung des Temperaturprofils nach oben aus.

In realen technischen Anordnungen ist die lokale Änderung des Wärmestroms im allgemeinen transienten Fall in ihrer räumlichen und zeitlichen Variation nicht ausreichend erfassbar. Messvorschriften, die für den stationären Fall entwickelt wurden, liefern bei Durchführung unter transienten Bedingungen deshalb fehlerhafte Ergebnisse. Eine korrekte transiente Messung des Wärmestroms wird erfindungsgemäß durch die Erfassung und Berücksichtigung des mit der Wärmekapazität des Sensors verbundenen Beitrags zum Wärmestrom an der Messfläche unter Einhaltung quasistationärer Bedingungen erreicht.

Ausgehend von Vorrichtungen zur Messung des Wärmestroms im stationären Vergleichsverfahren werden erfindungsgemäß Messbedingungen genannt, unter deren Einhaltung der Betrag des Wärmestroms an der Messfläche 14 aus den Temperaturmesswerten am Wärmestromsensor 20, 20' auch unter transienten Verhältnissen bestimmbar ist. Dabei bezieht sich die Betrachtung auf eine serielle thermische Kopplung zwischen Wärmestromsensor 20, 20' und Messobjekt bzw. Probe 10; einerseits und hauptsächlich auf Wärmestromsensoren 20 in Form eines langen prismatischen Blocks (auch als Referenzblock 12 bezeichnet), dessen Mantelfläche möglichst ideal thermisch gedämmt ist, so dass ein lateraler Wärmezu- oder -abstrom wirksam unterbunden ist, mit interner Messung des Temperaturprofils, andererseits auch auf dünne scheibenförmige Wärmestromsensoren 20' mit Messung der Temperaturdifferenz zwischen ihren Stirnseiten. Als Messfläche 14 wird jeweils die mit dem Messobjekt bzw. der Probe 10 in Kontakt gebrachte Stirnfläche des Wärmestromsensors 20, 20' bezeichnet.

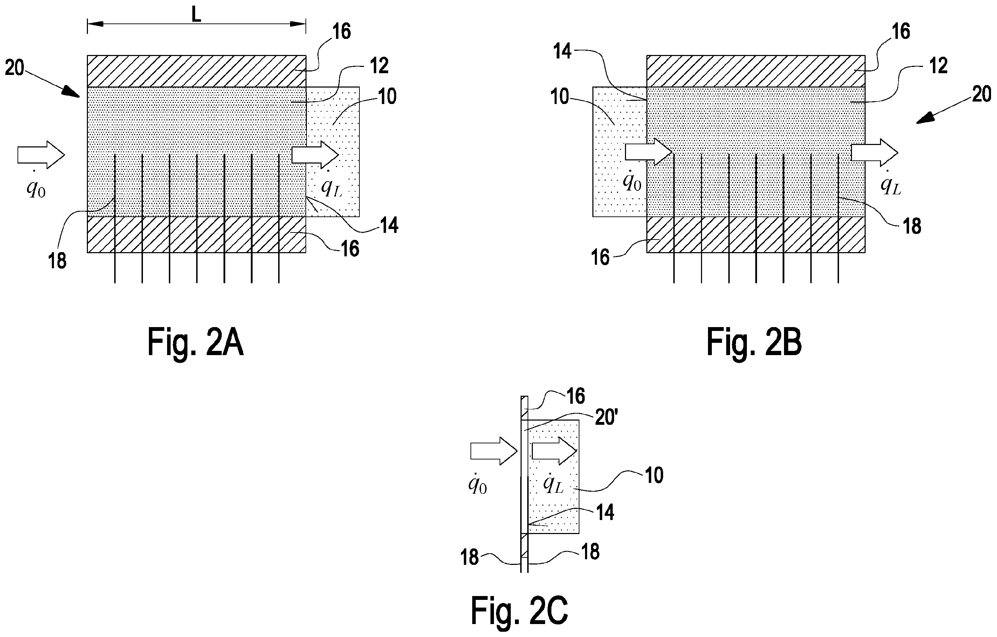

Im Folgenden wird Bezug genommen auf die Figuren 2A und 2B, welche schematisch einen Referenzblock 12 darstellen, auf dessen kalter Seite in Figur 2A bzw. dessen Heißseite in Figur 2B eine Probe 10 mit einer Messfläche 14 wärmeleitfähig verbunden ist. Hierbei ist in den Figuren 2A, 2B dargestellt, dass die Messfläche 14 mit der Außenfläche der Probe 10 korrespondiert und beide Flächen planar sind. Jedoch ist die vorliegende Erfindung nicht hierauf beschränkt, sodass allgemein lediglich eine an die Probe 10 angepasst geformte Messfläche 14 am Wärmestromsensor bzw. dem Referenzblock 12 vorhanden sein soll, welche im thermischen Kontakt zur Probe steht. Insbesondere ist hierbei eine vollflächige gute Wärmekopplung erforderlich. Die Probe 10 kann hierbei die Messfläche 14 gleichmäßig bedecken. Insbesondere ist jedoch keine vollständige Überdeckung der Messfläche 14 erforderlich. Insbesondere ist jedoch von einem eindimensionalen Wärmetransport, d. h. parallelen Wärmestromlinieren durch den Wärmestromsensor 20, 20' bzw. den Referenzblock 12 auszugehen. Dabei ist ein beliebiger Randüberstand der Probe 10, aber auch ein geringer Randüberstand des Wärmestromsensors 20, 20' gegenüber der Probe 10 zuzulassen. Es wird hierbei eine ideale thermische Kopplung oder eine homogen über die Grenzfläche bzw. Messfläche 14 verteilte Wärmeübergangszahl angenommen.

Nachfolgend wird erneut Bezug genommen auf die Figuren 2A, 2B. Die lateralen Flächen des Referenzblocks 12 sind durch eine Isolierung 16 thermisch von der Messumgebung isoliert, sodass eine laterale Wärmeabgabe beispielsweise durch Wärmestrahlung reduziert wird. Entlang der Richtung des Wärmestroms sind Temperatursensoren 18 angeordnet, mittels derer der Temperaturdrift und insbesondere der ortsabhängige Temperaturdrift entlang des Referenzblocks 12 ermittelbar ist.

Nachfolgend wird Bezug genommen auf die Figur 2C, welche einen dünnen, scheibenförmigen Wärmestromsensor 20' zeigt. Auch dieser kann an dessen Mantelflächen eine Isolierung 16 aufweisen. Mit der Messfläche 14 ist wiederum eine Probe 10 verbunden. Mittels Temperatursensoren 18 kann die Temperatur an den Stirnflächen des scheibenförmigen Wärmestromsensors 20' und insbesondere der Temperaturdrift an den jeweiligen Stirnflächen erfasst werden.

Dem erfindungsgemäßen transienten Verfahren liegt die Einstellung und Erhaltung eines quasistationären Zustandes zugrunde, der dadurch gekennzeichnet ist, dass sich an jedem Ort im Wärmestromsensor 20, 20' die Temperatur mit einer konstanten (oder nur sehr langsam variierenden) Rate zeitlich ändert, wobei diese Rate von Ort zu Ort verschieden sein kann. Damit tritt aufgrund der Wärmekapazität des Materials an jedem Ort eine zeitlich konstante, definiert ortsabhängige Wärmeaufnahme durch das Material (bei steigender Temperatur) oder Wärmeabgabe (bei fallender Temperatur) auf, die für einfache Geometrien mathematisch-analytisch erfassbar und aus der Rate der Temperaturänderung und Stoffgrößen des Materials des Wärmestromsensors 20, 20' abschätzbar ist. Bei einem Wärmestromsensor 20 in Gestalt eines homogenen prismatischen Blocks (Referenzblocks 12, Figuren 2A und 2B) müssen die Wärmeleitfähigkeit und die spezifische Wärme des Materials bekannt sein, bei einem integralen dünnen scheibenförmigen Wärmestromsensor 20' (Fig. 2C) dessen Wärmewiderstand und Wärmekapazität.

Im stationären Verfahren wird der konstante Wärmestrom durch den Wärmestromsensor 20, 20' durch eine Messung der Temperaturdifferenz über die Gesamtlänge L des Referenzblocks 12 (bzw. die Gesamtdicke eines scheibenförmigen Wärmestromsensor 20), geteilt durch den Wärmewiderstand des Wärmestromsensors 20, 20', bestimmt. Entsprechende Messverfahren dazu sind beschrieben und werden hier als bekannt vorgesetzt. Unter allgemeinen transienten Verhältnissen liefert dieses Vorgehen einen Mittelwert über den Wärmestrom im Wärmestromsensor 20, 20', der sich jedoch von den an den Stirnflächen ein- und austretenden Beträgen des Wärmestroms in unbekannter Weise unterscheidet. Jedoch kann durch die erfindungsgemäße Einstellung eines quasistationären Zustandes verbunden mit der Messung der Temperaturänderungsrate (oder "Temperaturdrift") an beiden Stirnflächen des Wärmestromsensors 20, 20' bzw. entlang des Referenzblocks 12 eine Beziehung zwischen dem gemessenen mittleren Wärmestrom und den Grenzflächen-Wärmeströmen des Wärmestromsensor 20, 20', insbesondere an der Messfläche 14, aufgestellt werden und zur Bestimmung des korrekten Wärmestroms an der Messfläche 14 herangezogen werden. Dazu wird aus Temperaturmessungen im Inneren oder an den Stirnflächen des Wärmestromsensors 20, 20' die mittlere Temperaturänderungsrate des Wärmestromsensors 20, 20' bestimmt. Multiplikation mit der Wärmekapazität des Wärmestromsensors 20, 20' liefert die konstante im Wärmestromsensor 20, 20' absorbierte bzw. freigesetzte Wärmeleistung. Der Zu- bzw. Abstrom dieser Wärmeleistung in den bzw. aus dem Wärmestromsensor 20, 20' verteilt sich auf die beiden Seiten des Wärmestromsensor 20, 20' in einem festen Verhältnis, das nur von der Temperaturänderungsrate an den Stirnflächen des Wärmestromsensors 20, 20' abhängt.

Im Fall eines dünnen Wärmestromsensors 20' mit geringer Temperaturdifferenz über dem Wärmestromsensor 20, 20' (Fig. 2C) ergibt sich eine symmetrisch hälftige Verteilung zu beiden Seiten; allgemein wird entsprechend der Verteilungsregel der größere Anteil zur Seite mit der stärkeren Temperaturänderungsrate ausgetauscht. Damit kann der Wärmestrom an der Messfläche 14 zur Probe 10 berechnet werden, in dem der gemessene mittlere Wärmestrom im Wärmestromsensor 20, 20' um den Betrag der auf Grund der Wärmekapazität des Wärmestromsensor 20, 20' gespeicherten (bei steigender Temperatur) bzw. abgegebenen (bei fallender Temperatur) Wärmeleistung korrigiert wird.

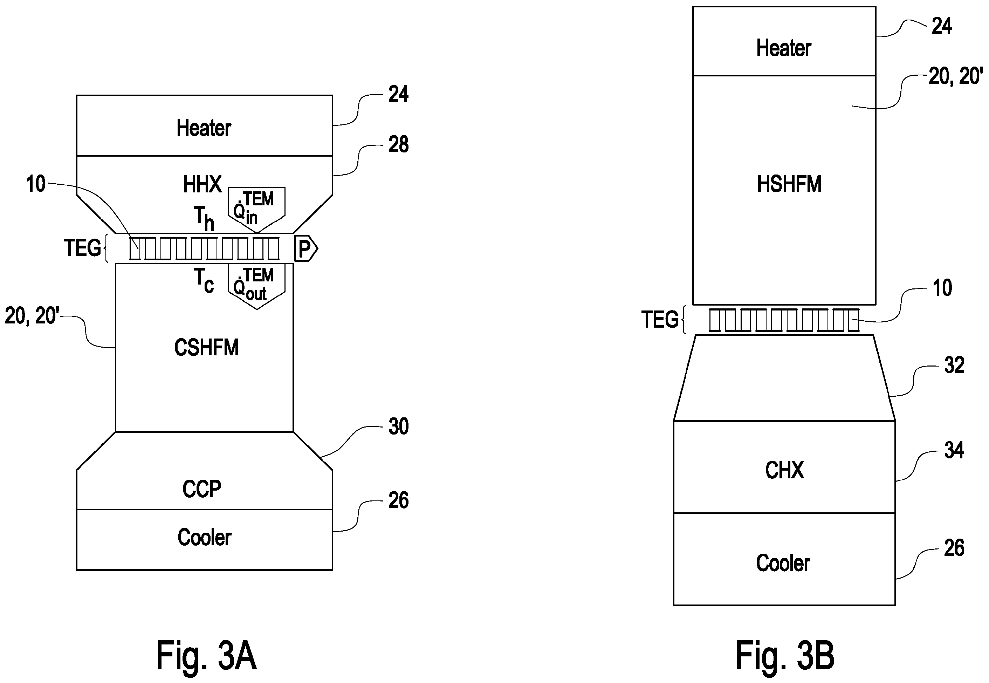

Hierbei ist es für den maßgeblichen Vorteil der transienten Messung gegenüber dem stationären Verfahren, nämlich die weit zeiteffektivere Durchführung, von entscheidender Bedeutung, dass sich quasistationäre Verhältnisse in jeder der Einzelkomponenten des Wärmeflusspfades eines Gesamtaufbaus wesentlich schneller einstellen als über den Gesamtaufbau insgesamt. Der Gesamtaufbau enthält in serieller Anordnung ("Messsäule") typischerweise neben dem Wärmestromsensor 20, 20' und dem Messobjekt/Probe 10 auch eine Wärmequelle 24, eine Wärmesenke 26 und ggf. Übergangsstücke (beispielsweise zur Querschnittsanpassung zwischen Wärmequelle 24, Wärmesenke 26 und Probe 10). Dieser Gesamtaufbau ist in den Figuren 3A und 3B dargestellt für das Beispiel der Charakterisierung thermoelektrischer Module (TEG) als Proben 10. Zur Charakterisierung thermoelektrischer Module werden die Proben 10 zwischen einem Heizer 24 und einem Kühler 26 in einer thermischen Reihenschaltung zusammen mit dem Wärmestromsensor 20, 20' und Wärmeübertragern 28, 32, 34 eingesetzt. Fig. 3A zeigt das Schema einer Messstrecke, welche einen Wärmestromsensor 20, 20' zwischen der kalten Seite der Probe 10 und dem Kühler 26 aufweist (CSHFM - cold side heat flow meter), während auf der Heißseite ein Wärmeübertrager 28 (HHX - hot side heat exchanger) die Ankopplung der TEG-Probe 10 an den Heizer 24 gewährleistet. Der Einsatz der Erfindung ist jedoch nicht auf die Messung des Wärmestromes an der Kaltseite des thermoelektrischen Moduls beschränkt. Wärmestrommessungen können auch auf der Heißseite bzw. auf beiden Seiten simultan durchgeführt werden. So zeigt Fig. 3B die Anordnung der TEG-Probe 10 auf der Kaltseite des Wärmestromsensors 20, 20', wobei mittels Wärmeübertrager 32, 34 (CHX - cold side heat exchanger) eine thermische Kopplung mit dem Kühler 26 erreicht wird.

Die Zeitkonstanten für die Relaxation eines solchen für thermische Messungen typischen seriellen Gesamtaufbaus in den stationären oder quasistationären Zustand sind gleich; diejenige des Wärmestromsensors 20, 20' allein als eine Teilkomponente eines Gesamtsystems in seinen quasistationären Zustand ist wesentlich geringer als erstere. Für eine temperaturabhängige Messreihe unter sonst unveränderten Randbedingungen ist nur einmalig zu Beginn der Messreihe oder ggf. ein weiteres Mal beim Wechsel vom Aufheizen zum Abkühlen, sofern in einem Temperaturzyklus aufeinander folgend in diesen beiden Modi gemessen werden soll, ein Abwarten der Relaxation des Sensors in den quasistationären Zustand erforderlich, ansonsten kann kontinuierlich gemessen werden. Bei begleitender Variation eines zweiten Freiheitsgrades der Messbedingungen (z. B. ein elektrischer Strom durch das Messobjekt, axiale Last längs der Messsäule zur Steuerung der thermischen Kopplung an den thermischen Kontaktstellen zum Messobjekt usw.), soweit dieser sich auf die Temperaturverteilung in der Anordnung auswirkt, ist nach jeder Änderung des betreffenden Parameters die Relaxation des Wärmestromsensors in den quasistationären Zustand abzuwarten. Damit entsteht wie bei der stationären Messung eine Reihung von diskreten Messpunkten oder kontinuierlichen Messperioden, zu Beginn derer jeweils ein Abwarten zur Stabilisierung erforderlich ist. Die erforderliche Wartezeit skaliert jedoch nicht wie im stationären Fall mit der Relaxation des Gesamtsystems, sondern nur mit der Relaxation des Sensorblocks selbst und ist damit viel kürzer.

Die Dauer der Relaxation in den quasistationären Zustand kann aus dem Wärmewiderstand und der Wärmekapazität des Wärmestromsensors bzw. seiner thermischen Diffusivität abgeschätzt werden und liegt in realen Systemen bei dünnen Sensoren unter einer Sekunde, bei längeren Blöcken zur Wärmestrommessung typischerweise bei einigen bis einigen 10 s. Die Relaxation erfolgt anfänglich überexponentiell, im Wesentlichen gehorcht sie einem einfachen exponentiellen Abklingen, dessen Zeitkonstante allein durch die Sensoreigenschaften bestimmt wird. Entsprechend dem Exponentialabfall ist nach einer Dauer des ca. 4,5fachen der Zeitkonstante eine Störung des Temperaturprofils im Wärmestromsensor auf weniger als 1% des Ausgangswertes abgefallen, so dass dann ein praktisch ungestörter quasistationärer Zustand vorausgesetzt und die Messvorschrift angewendet werden kann. Für die praktische Anwendbarkeit des Verfahrens ist es weiterhin wichtig, dass die Bedingung zeitlich konstanter Temperaturdrift nicht strikt eingehalten werden muss. Es ist lediglich erforderlich, dass die Änderung der Drift innerhalb der Relaxationszeit des Sensors prozentual klein bleibt. Zwar stellt dies eine kontinuierliche Störung der vorausgesetzten Quasistationarität dar, die aber bei entsprechend kleiner Amplitude unwesentlich für das Messergebnis bleibt.

Die Gesamtdauer einer Messreihe, die sich im transienten Modus ergibt, wird praktisch nicht mehr dominierend von den verfahrensbedingten Wartezeiten zur Stabilisierung limitiert, sondern durch andere Bedingungen der Messanlage und Messung, z.B. durch sinnvoll realisierbare maximale Heizleistungen in den Messanlagen sowie ggf. den Zeitbedarf der Messwerterfassung selbst, sofern komplexere Messprogramme zu realisieren sind. Temperaturintervalle von mehreren 100 K lassen sich im Messbetrieb so in einer oder wenigen Stunden überstreichen. In der praktischen Realisierung kann sich die Heizrate über die Gesamtzeit einer Messreihe durchaus allmählich um 50% ändern, ohne dass die Quasistationarität der Messung relevant beeinträchtigt wird. Dies ermöglicht es, der Temperaturdrift durch eine programmiert gerampte oder konstante Heizleistung vorzugeben. Dies ist viel einfacher zu implementieren als eine direkte Regelung der Temperaturdrift, die zu häufigen und raschen Regelschwingungen führen kann, die die Quasistationarität wesentlich stärker beeinträchtigen können als eine langsame kontinuierliche Änderung der Heizrate.

Ausführungsbeispiel prismatischer Block

Das transiente Messverfahren zur Bestimmung von Wärmeströmen nach dem Vergleichsverfahren wurde durch die Lösung der transienten Fourier-Gleichung der Wärmeleitung für eindimensionale prismatisch-blockförmige Geometrie (Figuren 2A und 2B) entwickelt. Ein Wärmestrommesser 20 in dieser Blockgestalt wird den Randbedingungen ein- oder beidseitig konstant driftender Grenzflächentemperatur unterworfen. Die Lösung der Fourier-Differentialgleichung liefert eine zeit- und ortsabhängige Temperaturfunktion, welche sich aus einem quasistationären und einem weiteren, rasch abklingenden transienten Funktionsterm zusammensetzt. Letzterer klingt nach einer Änderung der Randbedingungen, d. h. einer plötzlichen Änderung der Temperatur oder der Temperaturdrift an einer Stirnfläche des Sensors im Wesentlichen exponentiell mit einer Zeitkonstanten $\tau = L^2/\alpha\pi^2$ ab, die durch die Länge L des Wärmestromsensorblocks 12 in Richtung des Wärmeflusses und die thermische Diffusivität (oder Temperaturleitfähigkeit) $\alpha$ des Blockmaterials bestimmt wird. Innerhalb einer Zeitspanne von 4 bis 5 $\tau$, welche in typischen Aufbauten in der Größenordnung von ca. 10-100 Sekunden liegt, klingt der relaxierende Anteil des Temperaturprofils längs des Wärmestrommessers 20 ab und es verbleibt der quasistationäre orts- und zeitabhängige Anteil $T_{qs}(x,\ t)$ aus dessen räumlicher Änderung sowie der Wärmeleitfähigkeit des Materials $\kappa$ der lokale Wärmestrom berechnet werden kann. Mit den Raten der Temperaturdrift $r_0$ und $r_L$ (gemessen in K/s oder, für den praktischen Messbetrieb üblicherweise in K/min), die an beiden Seiten des Wärmestrommessers 20 (Wärmeeintritt bei der Ortskoordinate x = 0, -austritt bei x = L) anliegen sowie mit der reduzierten Ortskoordinate $z = \frac{x}{L}$ und der orts- aber nicht zeitabhängigen Funktion $\Delta T_{qs,c}(z) = g(z, r_0, r_L) = r_0 f_{z,0}(z) + r_L f_{z,L}(z)$,

gebildet aus den Funktionen $f_{z,0}(z) = -\frac{L^2}{6\alpha}\left(z^3 - 3z^2 + 2z\right)$ und $f_{z,L}(z) = -\frac{L^2}{6\alpha}\left(z - z^3\right)$, die die Durchbiegung des Temperaturprofils aufgrund der Wärmekapazität des Referenzblocks 12 verursacht durch eine links- ($f_{z,0}(z)$) bzw. rechtsseitige ($f_{z,L}(z)$) Temperaturdrift beschreiben, ergibt sich die quasistationäre Temperaturfunktion für eine beidseitige Temperaturdrift am Referenzblock 12, ausgehend von einer isothermen Starttemperatur $T_{00}$:

$$T_{qs}(z,t) = T_{00} + t\{r_0\left(1 - z\right) + r_L\,z\} + g(z, r_0, r_L)$$

Die zeitabhängige Temperaturdifferenz über dem Wärmestromsensor 20 erhält man damit zu $\Delta T(t) = t(r_0 - r_L)$, sowie den ein- und ausströmenden Wärmefluss zu

$$\dot{q}_0(t) = \kappa\left\{\frac{\Delta T(t)}{L} + \frac{2r_0 + r_L}{6\alpha}L\right\}\ \text{(einfließend)}$$

und

$$\dot{q}_L(t) = \kappa\left\{\frac{\Delta T(t)}{L} - \frac{r_0 + 2r_L}{6\alpha}L\right\}\ \text{(ausfließend)}, \tag{1}$$

der sich zusammensetzt aus der aufgrund der anliegenden Temperaturdifferenz $\Delta T$ hindurchfließenden Fourier-Wärme $\dot{q}_F(t) = \kappa\,\frac{\Delta T(t)}{L}$, die im stationären Fall als einziger Beitrag auftritt und dort direkt gemessen wird, sowie (demgegenüber meist kleinen) zeitlich konstanten Korrekturen $\dot{q}_{0,c} = \kappa\,\frac{2r_0 + r_L}{6\alpha}L$ (einfließende Seite) und $\dot{q}_{L,c} = -\kappa\,\frac{r_0 + 2r_L}{6\alpha}L$ (ausfließende Seite), die die Verstimmung des ein- bzw. austretenden Wärmeflusses gegenüber dem Fall stationärer Randbedingungen beinhalten. Das Verhältnis der Wärmestrombeiträge an den Stirnflächen des Wärmestromsensors 20 aufgrund seiner Wärmekapazität $\frac{\dot{q}_{0,c}}{\dot{q}_{L,c}} = -\frac{2r_0 + r_L}{r_0 + 2r_L}$ ist konstant und nur vom Verhältnis der Driftraten $\frac{r_0}{r_L}$ abhängig. Eine exakte Wärmestrommessung im quasistationären transienten Fall kann durch Korrektur des gemessenen Wertes der hindurchfließenden Fourier-Wärme $\dot{q}_F$ um den Wärmestrombeitrag aufgrund der Wärmekapazität des Sensors $\dot{q}_{0,c}$ bzw. $\dot{q}_{L,c}$ erhalten werden. Eine Wärmestrommessung unter quasistationären Bedingungen, die auf dieselbe Weise wie unser stationären Bedingungen ausgeführt wird, liefert mit guter Genauigkeit den Wert von $\dot{q}_F$, jedoch müssen dabei, anders als im stationären Fall, alle gemessenen Temperaturen zur selben Zeit gemessen oder auf ein und denselben Zeitpunkt interpoliert werden. Für diesen Zeitpunkt gilt der ermittelte (linear zeitabhängige) Wert von $\dot{q}_F$.

Zur Bestimmung der zeitabhängigen Temperaturdifferenz werden die Driftraten $r_0$ und $r_L$ aus der Differenz zweier zeitlich aufeinanderfolgend gemessener Temperaturprofile $T_{qs\_0/L}(t_2) - T_{qs\_0/L}(t_1)$ berechnet.

Wie oben gezeigt, beinhaltet das Temperaturprofil im Wärmestrommesser 20 den Beitrag des partiellen Temperaturprofils aufgrund der Wärmekapazität $\Delta T_{qs,c}(z) = g(z, r_0, r_L)$, welches sich im typischen Fall konstanter Wärmeleitfähigkeit über den Referenzblock 12 als Polynom dritter Ordnung beschreiben lässt, während der hindurchfließende Fourier-Wärmestrom mit einem linearen Beitrag zum Temperaturprofil verknüpft ist.

Praktisch kann die Messung im quasistationären Fall durchgeführt werden, indem man über längs des Referenzblocks 12 verteilte Temperatursensoren 18 das Temperaturprofil $T_{qs}(z, t)$ zu mehreren aufeinander folgenden Zeiten misst, mit einem geeigneten Funktionsansatz numerisch anpasst und auf die Stirnflächen des Wärmestromsensors 20 extrapoliert. Die Auswertung der Zeitverläufe $T_{qs}(0, t)$ und $T_{qs}(L, t)$ liefert die Driftraten $r_0$ und $r_L$, ihre Differenz den Wert $\Delta T(t)$. Damit kann der Wärmestrom an der Stirnseite des Wärmestromsensors 20, die als Messfläche 14 dient, nach Formel (1) bestimmt werden. Der Wärmestromsensor 20 kann mit der Probe 10 wahlweise an seiner Wärmezustrom- oder -abstromseite gekoppelt werden; entsprechend ist die Formel (1) für $\dot{q}_0(t)$ oder $\dot{q}_L(t)$ zu verwenden.

Aufgrund von Messunsicherheiten der Temperatursensoren 18 kann eine numerische Anpassung (Fit) des Temperaturprofils mit einem Polynom 3. Grades aufgrund der hohen Zahl freier Parameter zu unerwünschten numerischen Wechselwirkungen führen. Dies kann vermeiden werden, indem man die Funktion $T_{qs}(z, t) - g(z, r_0, r_L)$ als linear ortsabhängige Funktion fittet, wodurch sich die Anzahl der Fitparameter verringert. Die Driftraten $r_0$ und $r_L$ können dazu aus der Differenz zweier zeitlich aufeinanderfolgender Temperaturprofile $T_{qs}(z, t_2) - T_{qs}(z, t_1)$, die ebenfalls eine lineare Ortsabhängigkeit darstellt, bestimmt werden.

Ausführungsbeispiel dünner Wärmestromsensor

Die quasistationär-transiente Messung des Wärmestroms mit einem dünnen Wärmestromsensor 20' (Fig. 2C) erfolgt prinzipiell ebenso wie vorstehend für einen langen prismatischen Block beschrieben, mit Unterschieden in den folgen Merkmalen: Anders als im lange Referenzblock 12 wird nicht das axiale Temperaturprofil bestimmt, sondern mittels zweier Temperatursensoren 18 an den Stirnflächen deren Temperaturen direkt gemessen; daraus werden die Temperaturdifferenz sowie der mittlere Temperaturdrift bestimmt. Aufgrund seiner geringen Dicke folgt dieser Sensortyp einer Änderung der Randbedingungen besonders schnell. Unter der vereinfachenden Annahme zum Aufbau des Sensors als einer Scheibe aus einem homogenen Material beträgt die Zeitkonstante der Relaxation in den quasistationären Zustand $\tau = WC/\pi^2$ mit dem Wärmewiderstand $W = \Delta T/\dot{Q}$, zu bestimmen aus der Temperaturdifferenz $\Delta T$, die sich am Sensor beim Durchgang eines konstanten Wärmestroms $\dot{Q}$ ausbildet und seiner Wärmekapazität $C = \dfrac{\dot{Q}_{0,c}}{r}$, definiert als Verhältnis aus aufgenommener Wärmeleistung $Q_{0,c}$ bei homogener Erwärmung mit der Heizrate r. Praktisch sind solche Wärmestromsensoren 20' oft zur Generierung eines elektrischen Messsignals intern strukturiert und nicht homogen aufgebaut, daher dient dieser Wert der Zeitkonstante nur als Richtwert. Wegen der in Bezug auf die praktisch relevanten Heizraten und Gesamtdauer einer Messreihe sehr geringen Relaxationszeit ist eine genaue Kenntnis dieser praktisch nicht erforderlich. Praktisch kann man problemlos eine etwas längere als die berechnete Stabilisierungszeit von ca. 4 - 5 $\tau$ ansetzen.

Für einen dünnen Wärmestromsensor 20' ist der Temperaturdrift auf beiden Seiten praktisch gleich und damit auch die betragsmäßige Korrektur des Wärmeflusses auf beiden Seiten, $\dot{q}_{0,c} = \dfrac{r}{2}\dfrac{C}{A}$ bzw. die des Wärmestroms

$\dot{Q}_{0,c} = r\dfrac{C}{2}$ mit der Wärmekapazität C des Wärmestromsensors 20' und der Fläche $A$ der Messfläche 14. Diese Korrektur des gemessenen mittleren durchgeleiteten Wärmestroms $\dot{Q}$ kann ebenso auch auf handelsübliche kalibrierte Dünnschicht-Wärmestromsensoren 20' angewendet werden, die über zwei Messleitungen eine elektrische Messspannung liefern, die über einen produktspezifischen (üblicherweise temperaturabhängigen) Kalibrierfaktor direkt in den mittleren durchgeleiteten Wärmestrom umgerechnet wird. Der korrekte eintretende Wärmestrom in den Sensor unter transienten Bedingungen ergibt sich dann zu $\dot{Q} + \dot{Q}_{0,c}$, der korrekte austretende Wärmestrom zu $\dot{Q} - \dot{Q}_{0,c}$.

Zu beachten ist, dass diese Vorschrift bei allen Ausführungsbeispielen sinngemäß gleichermaßen im Aufheiz- wie im Abkühlfall gilt, jedoch im Abkühlfall die Heizrate r und damit auch der Korrekturbetrag negative Werte annehmen.

Charakterisierung des stationären Zustandes eines Systems basierend auf transienten Messungen

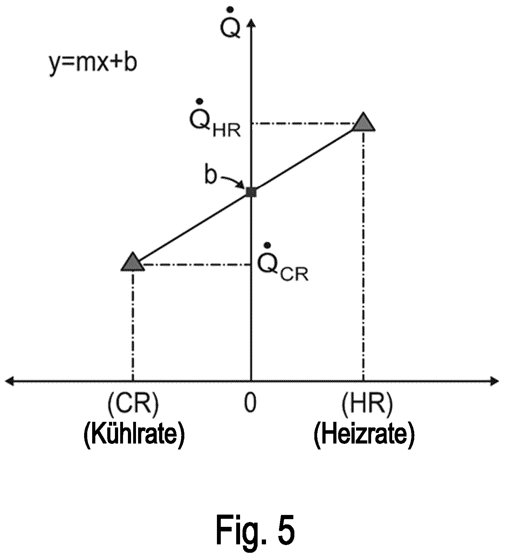

Abgesehen vom Vorteil der viel schnelleren Durchführung im Vergleich zu stationären Messungen muss bei transienten Messungen auch ein verändertes Verhalten des Messobjekts und des thermischen Gesamtsystems berücksichtigt werden, denn auch dort wirkt sich die Wärmekapazität aller Komponenten aus. Daraus ergibt sich die Frage, ob sich aus transienten Messungen auch auf das Verhalten des Systems unter stationären Bedingungen schließen lässt. Diese Frage ist praktisch relevant, da Messobjekte als Funktionsgruppen in Systemen und Anwendungen typischerweise oft im stationären Modus betrieben werden. Dieser Rückschluss ist mit einer Interpolation (oder "Hebelmethode") möglich, die in gleicher Weise für beide Sensorgeometrien, Referenzblock und dünne Scheibe, durchführbar ist und unmittelbar unter Nutzung der Messmethodik der stationären Messung ohne Modifikation der Auswertung erfolgen kann. Dazu führt man zwei Messreihen im selben Temperaturbereich, aber mit unterschiedlicher Temperaturdrift durch (z.B. einen Aufheiz- und einen darauffolgenden Abkühlvorgang), deren Messwerte miteinander ausgewertet werden. Da die Abweichung des Systemverhaltens vom stationären Verhalten im quasistationären transienten Fall proportional zur Temperaturdrift skaliert, können die erhaltenen Messwerte bei einer gegebenen Temperatur gegen den Temperaturdrift aufgetragen und linear auf den Driftwert Null interpoliert (oder, bei gleichem Vorzeichen der Driftrate in beiden Fällen, extrapoliert) werden (Fig. 5). Der zum stationären Zustand gehörige Wärmestrommesswert entspricht gerade dem Achsenabschnitt der Verbindungsgeraden zwischen den Messwerten aus beiden Messungen (z. B. Auf- und Abkühlmessung). Liegen mehr als zwei Messungen vor, können sie in die Hebelmethode einbezogen werden, indem eine Ausgleichgerade durch alle Messwerte der verschiedenen Messungen bei gleicher Messtemperatur gelegt wird. Ein wesentlicher Vorteil dieser Methode ist, dass sie einerseits wesentlich schneller als eine stationäre Messung ist, dennoch aber im Wesentlichen ohne Modifikationen in Hardware und Auswertung, abgesehen von der beschriebenen gewichteten Mittelung der Messwerte, unmittelbar mit bestehenden Anlagen zum stationären Verfahren durchgeführt werden kann, indem auf die Stabilisierungsperioden verzichtet wird und lediglich die mittlere Heizrate an einer wählbaren Stelle des Messkopfes aufgenommen wird. Vorteilhaft, weil praktisch vereinfachend, ist auch, dass dabei das oben beschriebene Korrekturverfahren um den Betrag der aufgrund der Wärmekapazität vom Wärmestromsensor 20, 20' aufgenommenen bzw. freigesetzten Wärme nicht angewendet werden muss, da auch der Korrekturterm linear mit der Heizrate skaliert. Eine einfache Messung des mittleren Wärmestroms im Wärmestromsensor 20, 20' wie beim stationären Verfahren ist ausreichend. Werden begleitend zum Wärmestrom weitere Messgrößen an der Probe 10 aufgenommen, die ebenfalls im transienten Modus gegenüber dem stationären Zustand proportional zur Heizrate verfälscht werden, so können auch diese bei den - beiden oder mehreren - verknüpften Messreihen begleitend mit der im stationären Modus üblichen Methodik gemessen und analog zum gemessenen Wärmestrom auf eine verschwindende Heizrate interpoliert werden. Vereinfachend ist ferner, dass auch die Heizrate nicht notwendig an der Messfläche 14 des Wärmestromsensors 20, 20' bestimmt werden muss. Die Messung an einem beliebigen aber festen Ort innerhalb oder in der Nähe des Wärmestromsensors 20, 20' ist ausreichend. Der Vorteil dieser Hebelmethode besteht neben der hohen Zeitersparnis auch in der weit höheren Messpunktdichte, da kontinuierlich über den Temperaturbereich gemessen werden kann. Der Bezugswert für die Zuordnung der Messwerte des Wärmestroms aus den Messreihen ist die Temperatur der Messfläche 14 des Wärmestromsensors 20, 20', d. h. die beschriebene Interpolation wird mit zwei (oder mehreren) Messwerten durchgeführt, die bei derselben Temperatur an der Messfläche 14 erhalten wurden. Hier ist ersatzweise kein anderer Messort zulässig, anders als bei der Heizrate. Wird die Hebelmethode auf eine gemessene Eigenschaft des Messobjekts angewendet und bildet sich über dem Messobjekt eine wesentliche Temperaturdifferenz aus, sollte ein Messort der Referenztemperatur im Inneren des Messobjektes gewählt werden, sofern sich die gemessene Eigenschaft des Messobjekts signifikant nichtlinear mit der Temperatur ändert. Wird der Wärmestrom oder die interessierende Messgröße des Messobjektes nicht kontinuierlich sondern in zeitlichen Intervallen aufgenommen, so wird der in die Hebelmethode eingehende Messwert aus einer Interpolation der temperaturabhängig variierenden Messwerte auf die Bezugstemperatur erhalten.

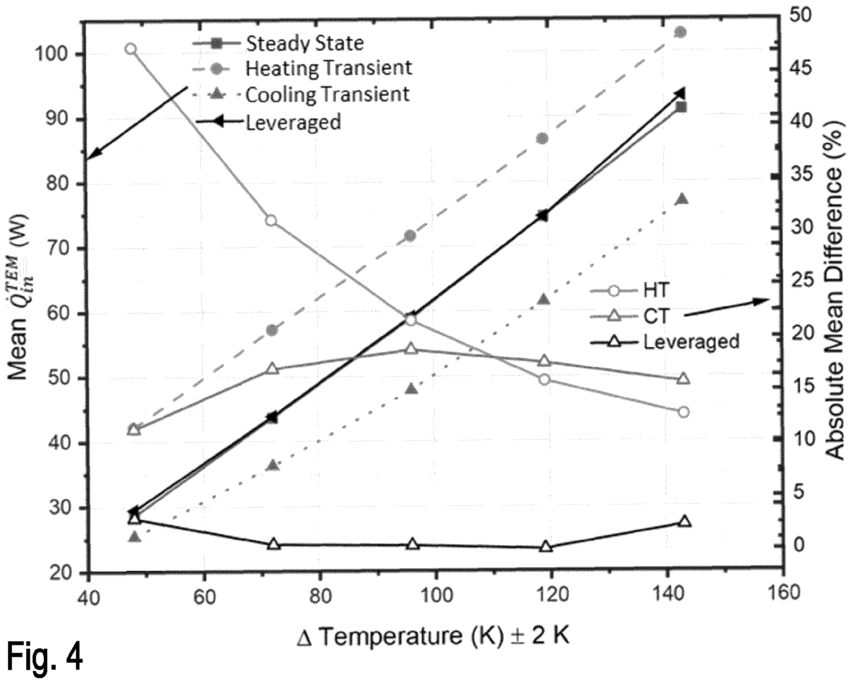

Figur 4 zeigt das Ergebnis der Hebelmethode für das Beispiel zweier vorliegender Messungen mit unterschiedlichem Vorzeichen der Driftrate im Vergleich zu einer Messung unter stationären Bedingungen (steady state). Hierbei ist der ermittelte mittlere Wärmestrom $\dot{Q}$ abgetragen für die Aufheizphase ("Heating Transient") und die Abkühlphase ("Cooling Transient"), welche gemäß der vorliegenden Erfindung ermittelt wurden. Der gemäß der Fig. 5 ermittelte mittlere Wärmestrom Q für den interpolierten stationären Fall ist aufgetragen als "Leverage" und verglichen mit einer Messung mittels der stationären Vergleichsmethode ("Steady state"). Die resultierende Abweichung zum Referenzwert liegt nach Anwendung oben beschriebener Interpolationsfunktion beider Wärmestromergebnisse aus der transienten Aufheiz- und Abkühlmessung unterhalb von 2.5% und damit weit unterhalb der typischen Messunsicherheit des stationären Vergleichsverfahrens.

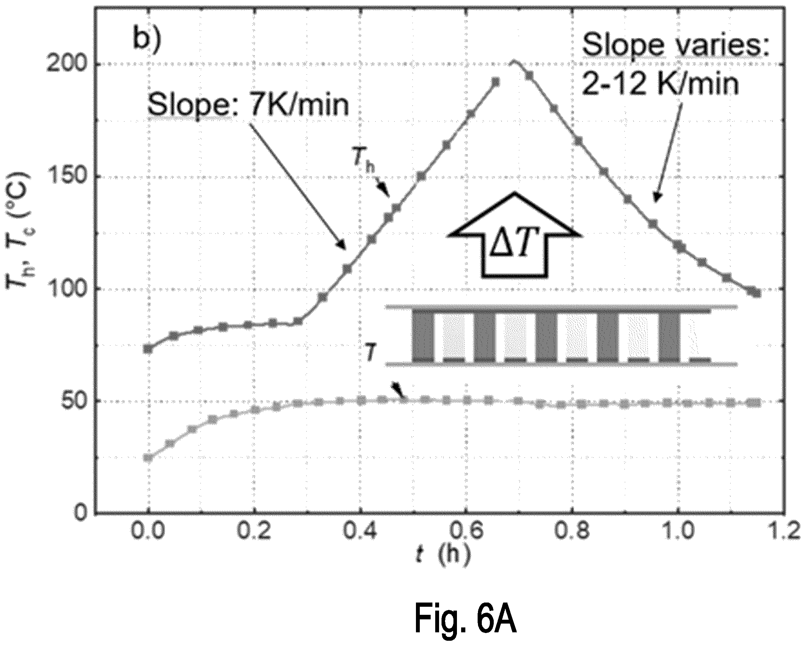

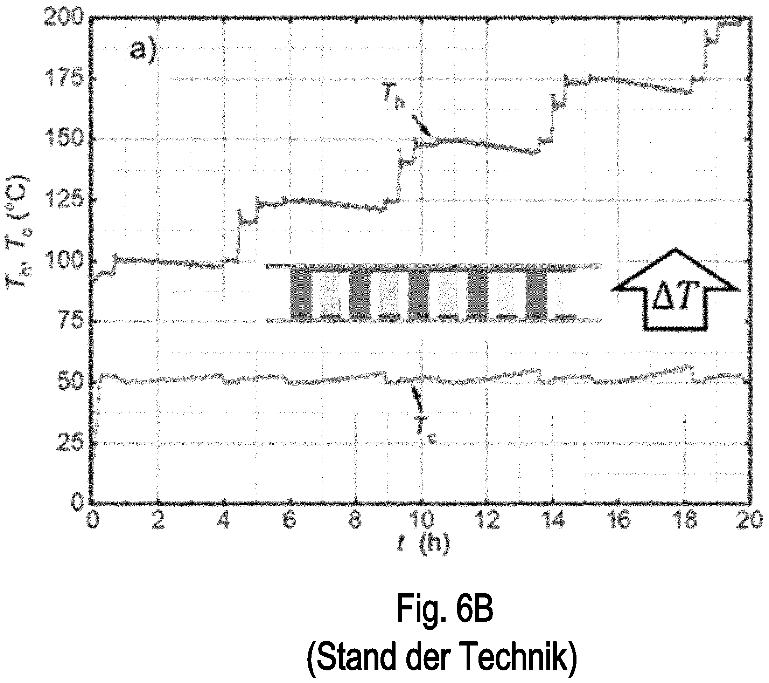

Der zeitliche Verlauf der transienten Messung gemäß der vorliegenden Erfindung im Vergleich mit dem stationären Messverfahren des Stands der Technik ist in den Figuren 6A und 6B dargestellt. Während gemäß der Fig. 6B aus dem Stand der Technik allein die Aufheizmessung unter stationären Messbedingungen mit nur 5 Messpunkten eine Dauer von 20 h aufweist, kann durch die transiente Messung gemäß dem Verfahren der vorliegenden Erfindung mit kontinuierlicher Temperaturdrift gemäß der Fig. 6A ein kompletter Temperaturzyklus (Auf- und Abkühlmessung) innerhalb von weniger als einer Stunde absolviert werden.

**Patentansprüche**

1. Verfahren zur transienten Messung eines Wärmestroms mit

   einem Wärmestromsensor mit einer Messfläche, die mit einer Probe in Kontakt ist,
   einer Wärmesenke und einer Wärmequelle, wobei der Wärmestromsensor und die Probe zwischen der Wärmesenke und der Wärmequelle angeordnet sind,
   wobei der Wärmestrom an der Messfläche ermittelt wird,
   wobei zur Ermittlung des Wärmestroms an der Messfläche der durch den Wärmstromsensor bestimmte Wärmestrom angepasst wird in Abhängigkeit von der aufgrund der Wärmekapazität des Wärmestromsensors abgegebenen oder aufgenommenen Wärmeleistung.

2. Verfahren nach Anspruch 1, **dadurch gekennzeichnet, dass** eine kontinuierliche Messung des Wärmestroms erfolgt.

3. Verfahren nach Ansprüche 1 oder 2, **dadurch gekennzeichnet, dass** mindestens eine Temperaturänderungsrate an dem Wärmestromsensor ermittelt wird.

4. Verfahren nach Anspruch 3, **dadurch gekennzeichnet, dass** eine mittlere Temperaturänderungsrate mit der Wärmekapazität des Wärmstromsensors multipliziert wird zur Ermittlung der durch den Wärmestromsensor aufgenommenen bzw. abgegebenen Wärmeleistung.

5. Verfahren nach Anspruch 3 oder 4, **dadurch gekennzeichnet, dass** es sich bei dem Wärmestromsensor um einen scheibenförmigen Wärmestromsensor handelt und die Temperaturdifferenz zwischen den gegenüberliegenden Stirnflächen herangezogen wird zur Ermittlung des Wärmestroms.

6. Verfahren nach Anspruch 3 oder 4, **dadurch gekennzeichnet, dass** es sich bei dem Wärmestromsensor um einen Referenzblock handelt, wobei entlang des Referenzblocks in Richtung des Wärmestroms mehrere Temperaturmessungen erfolgen zur Ermittlung der axialen Temperaturänderungsrate bzw. des axialen Temperaturgradienten.

7. Verfahren nach einem der Ansprüche 1 bis 6, **dadurch gekennzeichnet, dass** die Messfläche vollflächig mit der Probe in Kontakt ist.

8. Verfahren nach einem der Ansprüche 1 bis 7, **dadurch gekennzeichnet, dass** in Richtung des Wärmeflusses die Wärmequelle, der Wärmestromsensor, die Probe und die Wärmesenke oder die Wärmequelle, die Probe, der Wärmestromsensor und die Wärmesenke oder die Wärmequelle, der Wärmestromsensor, die Probe, der Wärmestromsensor und die Wärmesenke angeordnet sind.

9. Verfahren nach einem der Ansprüche 1 bis 8, **dadurch gekennzeichnet, dass** bei Übergang von einem Aufheizen zu einem Abkühlen oder bei Änderung eines für die thermischen Verhältnisse relevanten Probenparameters oder eines entsprechenden Parameters der Messbedingungen eine Relaxationszeit abgewartet wird, wobei die Relaxationszeit die Zeit bezeichnet, die erforderlich ist, bis ein quasistationärer Zustand erreicht ist.

10. Verfahren nach Anspruch 9, **dadurch gekennzeichnet, dass** es sich bei der Relaxationszeit um die Relaxationszeit des Wärmestromsensors handelt und/oder um die Relaxationszeit der Probe.

11. Verfahren nach einem der Ansprüche 1 bis 10, **dadurch gekennzeichnet, dass** mindestens zwei Messungen mit unterschiedlicher Temperaturänderungsrate durchgeführt werden und aus den mindestens zwei Messungen auf die Temperaturänderungsrate Null interpoliert oder extrapoliert wird.

12. Verfahren nach Anspruch 11, **dadurch gekennzeichnet, dass** die Temperaturänderungsraten der mindestens zwei Messungen ein unterschiedliches Vorzeichen haben.

13. Verfahren nach Anspurch 11 oder 12, **dadurch gekennzeichnet, dass** eine lineare Interpolation oder Extrapolation

durchgeführt wird.

EP 4 682 520 A1

```
┌─────────────────────────────────────────────────────────────┐
│ Ermitteln eines Wärmestrom mittels eines Wärmestromsensors    │      S01
│ insbesondere mittels einer gemessenen (ortsabhängigen)        │
│ Temperaturänderungsrate innerhalb oder an den Stirnflächen des│
│                    Wärmestromsensors                          │
└─────────────────────────────────────────────────────────────┘
                              │
                              ▼
┌─────────────────────────────────────────────────────────────┐
│ Anpassung des ermittelten Wärmestroms in Abhängigkeit von der auf Grund │   S02
│ der Wärmekapazität des Wärmestromsensors abgegebenen oder      │
│ aufgenommenen Wärmeleistung zur Ermittlung eines Wärmestroms an│
│        einer Messfläche des Wärmestromsensors.                │
└─────────────────────────────────────────────────────────────┘
```

# Fig. 1

Fig. 2A

Fig. 2B

Fig. 2C

Fig. 3B

Fig. 3A

Fig. 4

EP 4 682 520 A1

Fig. 5

EP 4 682 520 A1

Fig. 6A

EP 4 682 520 A1

Fig. 6B
(Stand der Technik)

**EUROPÄISCHER RECHERCHENBERICHT**

Europäisches
Patentamt
European
Patent Office
Office européen
des brevets

Nummer der Anmeldung

EP 25 19 0254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GB 2 612 787 A (IMPERIAL COLLEGE INNOVATIONS LTD [GB]) 17. Mai 2023 (2023-05-17) * Seite 2, Zeile 11 - Seite 3, Zeile 38 * * Abbildung 1a * | 1-13 | INV. G01N25/18 G01K17/00 |
| A | GÖBEL A ET AL: "Method for the Thermal Characterization of PCM Systems in the Volume Range from 100 ml to 1000 ml", INTERNATIONAL JOURNAL OF THERMOPHYSICS, SPRINGER US, NEW YORK, Bd. 38, Nr. 5, 10. März 2017 (2017-03-10), Seiten 1-10, XP036208099, ISSN: 0195-928X, DOI: 10.1007/S10765-017-2204-Z [gefunden am 2017-03-10] * Seite 67, Absatz 1 - Absatz 3 * * Abbildung 1 * | 1-13 | |
| A | NICOLAU VICENTE P ET AL: "Thermal conductivity and specific heat measurement of low conductivity materials using heat flux meters", THE SIXTEENTH EUROPEAN CONFERENCE ON THERMOPHYSICAL PROPERTIES, 2002, XP093336902, Gefunden im Internet: URL:http://www.eyoungindustry.com/uploadfile/file/20151004/20151004074056_75236.pdf> * Zusammenfassung * * Abbildungen 1,2,5 * | 1-13 | RECHERCHIERTE SACHGEBIETE (IPC) G01N G01W G01K |
| A | US 5 940 784 A (EL-HUSAYNI HANI A [US]) 17. August 1999 (1999-08-17) * Spalte 3, Zeile 13 - Zeile 32 * * Abbildung 1A * | 1-13 | |

-/--

Der vorliegende Recherchenbericht wurde für alle Patentansprüche erstellt

| Recherchenort | Abschlußdatum der Recherche | Prüfer |
|---|---|---|
| Den Haag | 20. November 2025 | Baranski, Jörg |

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 25 19 0254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 6 142 662 A (NARH KWABENA A [US] ET AL) 7. November 2000 (2000-11-07) * Spalte 17, Zeile 25 - Spalte 18, Zeile 11 * * Abbildung 1 * ----- | 1-13 | |
| A | GARIBOLDI ELISABETTA ET AL: "Methods to Characterize Effective Thermal Conductivity, Diffusivity and Thermal Response in Different Classes of Composite Phase Change Materials", MATERIALS, Bd. 12, Nr. 16, 10. August 2019 (2019-08-10), Seite 2552, XP093031669, DOI: 10.3390/ma12162552 * das ganze Dokument * ----- | 1-13 | |
| A | TLEOUBAEV AKHAN ET AL: "Accurate Simultaneous Measurements of Thermal Conductivity and Specific Heat of Rubber, Elastomers, and Other Materials for the 12 th Brazilian Rubber Technology Congress", 12TH BRAZILIAN RUBBER TECHNOLOGY CONGRESS, 2008, XP093336823, * Abbildung 1 * ----- | 1-13 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 20. November 2025 | Baranski, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 0254

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2025

| Im Recherchenbericht angeführtes Patentdokument | | Datum der Veröffentlichung | Mitglied(er) der Patentfamilie | | Datum der Veröffentlichung |
|---|---|---|---|---|---|
| GB 2612787 | A | 17-05-2023 | EP | 4430387 A1 | 18-09-2024 |
| | | | GB | 2612787 A | 17-05-2023 |
| | | | US | 2025035571 A1 | 30-01-2025 |
| | | | WO | 2023083937 A1 | 19-05-2023 |
| US 5940784 | A | 17-08-1999 | AU | 2198697 A | 22-09-1997 |
| | | | CA | 2248135 A1 | 12-09-1997 |
| | | | EP | 0885387 A1 | 23-12-1998 |
| | | | US | 5940784 A | 17-08-1999 |
| | | | WO | 9733161 A1 | 12-09-1997 |
| US 6142662 | A | 07-11-2000 | KEINE | | |

EPO FORM P0461

Für nähere Einzelheiten zu diesem Anhang : siehe Amtsblatt des Europäischen Patentamts, Nr.12/82